# FASCICULE DE BREVET EUROPEEN

(11) **EP 2 315 400 B1**
(45) Date de publication et mention de la délivrance du brevet: **17.06.2015**
(21) Numéro de dépôt: 10174434.0
(22) Date de dépôt: 27.08.2010
(51) Int. Cl.: H04L 12/58, H04M 7/00

(54) **Procédé et dispositif de gestion de communications de réponse à des courriels par adjonction à ces derniers d'un champ dédié de lien hypertexte de communication**
Verfahren und Vorrichtung zum Verwalten von Antwortkommunikationen auf eine Email durch Hinzufügen eines Hypertext-Verweises an die Email.
Method and apparatus for return communication managements to email by adding a hypertext link to the email

(30) Priorité: 21.10.2009 FR 0957386
(43) Date de publication de la demande: 27.04.2011
(73) Titulaire: ALCATEL LUCENT, 92100 Boulogne-Billancourt (FR)
(72) Inventeur: Christophe, Benoit, 91620, NOZAY (FR); Toubiana, Vincent, 91620, NOZAY (FR)
(74) Mandataire: Shamsaei Far, Hassan

(56) Documents cités:
- EP-A1- 1 345 373
- WO-A2-2006/044452
- DE-A1- 10 322 706
- US-A1- 2002 085 535
- US-A1- 2003 016 658
- US-A1- 2008 080 692

## Description

L'invention concerne les communications qui sont établies entre des équipements de communication d'usagers pour leur permettre de répondre à des courriels ayant fait l'objet d'une demande de réponse.

Aujourd'hui, lorsqu'un usager d'un équipement de communication reçoit sur ce dernier un courriel (ou « e-mail ») grâce à une application (ou client) de messagerie électronique, il est contraint, si une réponse a été requise pour ce courriel par l'usager qui l'a expédié, de générer et transmettre un nouveau courrier à l'adresse e-mail utilisée par cet expéditeur. Cela peut s'avérer problématique dans certaines situations, et notamment lorsque l'expéditeur du courriel initial souhaite une réponse immédiate alors qu'il est dans une phase de mobilité, voire d'itinérance, et donc qu'il lui est temporairement difficile, voire impossible, d'accéder à sa messagerie électronique.

Certes quelques solutions ont été proposées pour conférer un peu plus de souplesse aux courriels. Ainsi, il a été proposé dans la règle RFC 822 (qui définit le format des courriels et permet notamment la prise en compte de mots clés) d'adjoindre aux courriels un champ appelé « reply-to » (ou « répondre à ») destiné a être affiché avec le contenu informatif d'un courriel sur l'écran de l'équipement de communication d'un usager destinataire, et qui, lorsque ce dernier clique dessus (ou le sélectionne), lui permet de répondre à une adresse de communication choisie par l'usager expéditeur et éventuellement différente de celle qu'il a utilisée pour transmettre son courriel initial. Malheureusement, cette solution ne permet d'associer qu'une adresse e-mail au champ reply-to, si bien que l'usager destinataire ne peut répondre à l'usager expéditeur que par un courriel. En outre, l'adresse de communication utilisée pour répondre est visible, ce qui nuit à la confidentialité.

Il a également été proposé par la société Google une application, appelée Google Wave®, qui permet à un usager expéditeur qui dispose d'un compte Google de transmettre un courriel à un usager destinataire qui dispose également d'un compte Google, et à l'usager destinataire, une fois qu'il a ouvert ce courriel, d'insérer dans son contenu un commentaire à l'endroit de son choix, lequel peut être immédiatement lu par l'usager expéditeur, comme si l'on était en présence d'une session de messagerie instantanée (ou IM). On notera que cette application permet également à l'usager destinataire de se servir d'une application complémentaire de type Google Voice® ou Google Video® pour transmettre un commentaire de réponse de type voix ou vidéo. En d'autres termes, cette solution permet, en quelque sorte, de transformer une session de courriel en une session téléphonique. Cependant, cette solution nécessite que chaque usager dispose déjà non seulement d'un compte Google, mais également de toute une série d'applications Google, ce qui limite notablement le nombre d'usagers concernés.

Les demandes de brevet US2002/085535, US2003/016658, et WO2006/044452 décrivent toutes d'autres variantes également possibles.

Aucune solution connue n'apportant une entière satisfaction, l'invention a donc pour but d'améliorer la situation, et notamment de permettre à un usager destinataire qui a reçu un courriel de répondre automatiquement à l'usager qui a expédié ce dernier au moyen d'une communication d'un type différent du courriel, de préférence sans que ne soit divulgué l'identifiant de communication utilisé pour établir cette communication de réponse.

L'invention est définie par l'objet de la première revendication.

D'autres caractéristiques et avantages de l'invention apparaîtront à l'examen de la description détaillée ci-après, et du dessin annexé, sur lequel l'unique figure illustre de façon très schématique un réseau de communication auquel sont connectés des serveurs de messagerie électronique, un serveur de communication et deux équipements de communication équipés chacun d'un exemple de réalisation d'un dispositif de gestion selon l'invention.

Le dessin annexé pourra non seulement servir à compléter l'invention, mais aussi contribuer à sa définition, le cas échéant.

L'invention a pour objet de permettre à des usagers qui reçoivent des courriels avec des équipements de communication (Ei) de répondre automatiquement aux usagers qui ont expédié ces derniers au moyen de communications d'au moins un type différent du courriel.

Il est important de noter que l'on entend ici par « courriel » non seulement un contenu informatif (ou message, notamment textuel) qu'un usager veut transmettre à au moins un autre usager, mais également toutes les commandes (notamment définies par la règle RFC 821 dans le cas du protocole de transport SMTP (« Simple Mail Transfer Protocol »)), qui sont transmises de l'usager expéditeur du courriel vers l'usager destinataire dudit courriel, et les différents mots clés (notamment définis par la règle RFC 822) qui suivent la commande protocolaire SMTP appelée « DATA » qui précède l'envoi du contenu informatif et qui peuvent être intégrés dans le champ d'un courriel qui est réservé au contenu informatif.

Il est rappelé que selon la règle RFC 821 un courriel SMTP comprend au moins :
- une première commande appelée « EHLO » destinée à initier une session de courriel, et à laquelle répond un serveur de messagerie SMTP par un message d'accusé de réception de type « 250 OK »,
- une deuxième commande appelée « MAIL FROM » destinée à signaler au serveur de messagerie SMTP précité qui est l'expéditeur du courriel, et à laquelle répond ce serveur de messagerie SMTP par un message d'accusé de réception de type « 250 OK »,
- une troisième commande appelée « RCPT TO » destinée à signaler au serveur de messagerie SMTP précité qui est le destinataire du courriel (et qui peut être transmise plusieurs fois lorsqu'il y a plusieurs destinataires), et à laquelle répond ce serveur de messagerie SMTP par un message d'accusé de réception de type « 250 OK »,
- une quatrième commande appelée « DATA » destinée à signaler au serveur de messagerie SMTP précité que ce qui la suivra sera le contenu informatif du courriel, et à laquelle répond ce serveur de messagerie SMTP par un message de type « 354 start mail input ; finish with <CRLF.CRLF> »,
- un contenu informatif comprenant un message et des mots clés, comme par exemple « Subject: », « CC: » ou « BCC: »,
- une cinquième commande appelée « <CRLF.CRLF> » destinée à signaler au serveur de messagerie SMTP précité la fin du contenu informatif, et à laquelle répond ce serveur de messagerie SMTP par un message d'accusé de réception de type « 250 OK », et
- une sixième commande appelée « QUIT » destinée à signaler la fin du contenu informatif, et à laquelle répond le serveur de messagerie SMTP précité par un message de type « 221 Service closing ».

Dans ce qui suit, on considère à titre d'exemple non limitatif que les usagers sont munis d'équipements de communication (Ei) de type filaire, comme par exemple des ordinateurs, pouvant se connecter à un réseau de communication (R) de type filaire (par exemple ADSL). Mais, l'invention n'est limitée ni à ce type de réseau de communication, ni à ce type d'équipement de communication. Elle concerne en effet tout type de réseau de communication filaire ou non filaire, et donc tout type d'équipement de communication disposant d'une application (ou client) de messagerie électronique (CM) et pouvant se connecter à un réseau de communication filaire ou non filaire. Par conséquent, le réseau de communication (R) pourra également être, par exemple, un réseau mobile (ou cellulaire), et les équipements de communication (Ei) pourront également être, par exemple, des ordinateurs portables, des téléphones fixes ou mobiles, des assistants personnels numériques communicants (ou « PDAs »), ou des consoles de jeux communicantes, pourvu(e)s d'une application (ou client) de messagerie électronique (CM).

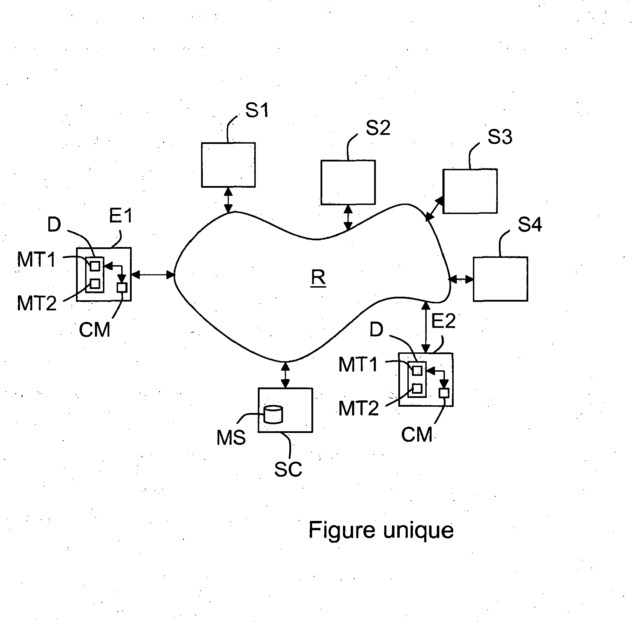

On a schématiquement représenté sur la figure 1 un exemple de réseau (de communication) R, éventuellement connecté au réseau de réseaux (ou Internet), et auquel sont connectés, d'une part, des équipements (de communication) Ei, appartenant à des usagers qui sont clients (directement ou indirectement (nomades)) de l'opérateur dudit réseau R, et d'autre part, des serveurs de messagerie Sj (ici j = 1 à 4) et un serveur de communication SC.

Dans l'exemple non limitatif illustré, deux équipements de communication E1-E2 (i = 1 ou 2) sont connectés au réseau R. Mais, l'invention s'applique dès lors qu'au moins un équipement de communication Ei est connecté au réseau R. Dans ce qui suit, on considère que le premier équipement (de communication) E1 est utilisé par un « premier » usager qui veut transmettre un courriel à un « second » usager, avec demande de réponse, et le second équipement (de communication) E2 est utilisé par un second usager pour recevoir un courriel d'un premier équipement (de communication) E1 d'un premier usager.

Les serveurs de messagerie Sj sont impliqués dans la chaîne de transmission des courriels.

Par exemple, et non limitativement, le serveur de messagerie S1 est un serveur SMTP qui est chargé de stocker les courriels qui sont transmis par des premiers usagers (ici représentés par le premier équipement de communication E1), au moyen du protocole de transport SMTP, à destination de seconds usagers, et de transmettre les courriels reçus au serveur de messagerie S4 de ces seconds usagers qui est dédié au stockage des courriels reçus. Lorsqu'un premier usager désire accéder aux courriels qu'il a transmis, il doit se connecter à ce serveur de messagerie (d'émission) S1.

Le serveur de messagerie S2 est par exemple dédié au stockage des courriels qui ont été transmis aux premiers usagers. Il est par exemple de type POP3. Lorsqu'un premier usager désire accéder aux courriels qu'il a reçus, il doit se connecter à ce serveur de messagerie (de réception) S2.

Le serveur de messagerie S3 est par exemple un serveur SMTP qui est chargé de stocker les courriels qui sont transmis par les seconds usagers (ici représentés par le premier équipement de communication E2), au moyen du protocole de transport SMTP, à destination, notamment, des premiers usagers, et de transmettre les courriels reçus au serveur de messagerie (de réception) S2 de ces premiers usagers qui est dédié au stockage des courriels reçus. Lorsqu'un second usager désire accéder aux courriels qu'il a transmis, il doit se connecter à ce serveur de messagerie (d'émission) S3.

Le serveur de messagerie S4 est par exemple dédié au stockage des courriels qui ont été transmis aux seconds usagers. Il est par exemple de type POP3. Lorsqu'un second usager désire accéder aux courriels qu'il a reçus, il doit se connecter à ce serveur de messagerie (de réception) S4.

Il est important de noter que les serveurs de messagerie (d'émission) S1 et S3 peuvent être éventuellement confondus, et les serveurs de messagerie (de réception) S2 et S4 peuvent être éventuellement confondus.

Le serveur de communication SC est chargé de gérer l'établissement de communications entre des équipements de communication Ei de premiers et seconds usagers. On reviendra sur ses fonctionnalités plus loin. On notera que plusieurs serveurs de communication SC peuvent être utilisés. Un tel serveur de communication peut par exemple (et éventuellement) appartenir à une société telle que Google ou Skype (dans ce cas le lien hypertexte de communication (sur lequel on reviendra plus loin) peut servir à ouvrir (ou lancer) un programme (comme par exemple un navigateur Internet (ou « browser web »)) chargé d'établir des communications).

On notera que les serveurs de messagerie Sj et/ou le serveur de communication SC peuvent éventuellement faire partie du réseau R. Mais, cela n'est pas obligatoire.

L'invention propose de mettre en oeuvre au sein du réseau R un procédé de gestion qui peut par exemple être mis en oeuvre au moyen de dispositifs (de gestion) D, du type de ceux qui sont illustrés non limitativement sur l'unique figure.

On notera que dans l'exemple non limitatif illustré sur l'unique figure chaque dispositif (de gestion) D fait partie d'un équipement de communication Ei qui est connecté au (ou accessible via le) réseau de communication R. Mais, en variante, un dispositif D, selon l'invention, peut être connecté à un équipement de communication Ei. Par conséquent, un dispositif D selon l'invention peut être réalisé sous la forme de modules logiciels (ou informatiques), ou de circuits électroniques, ou encore d'une combinaison de circuits électroniques et de modules logiciels.

Le procédé selon l'invention comprend deux étapes principales.

Une première étape principale (i) est mise en oeuvre chaque fois qu'un premier usager veut adresser un courriel à un second usager en demandant qu'il y réponde.

Cette première étape principale (i) peut par exemple être mise en oeuvre par des premiers moyens (ou module) de traitement MT1 qui font partie du dispositif D et qui sont (est) couplé(s) à l'application (ou client) de messagerie CM, que comprend l'équipement (de communication) Ei qui est associé à leur (son) dispositif D, afin de détecter (ou être averti(s)) lorsqu'un courriel doit être transmis à destination d'un équipement Ei' d'un second usager.

Cette première étape principale (i) consiste à adjoindre au courriel, qui est en cours de génération au moyen de l'application de messagerie CM et qui doit être transmis, un champ dédié CD qui comporte un lien hypertexte de communication (ou « communication hyperlink »).

Ce lien hypertexte de communication désigne le serveur de communication SC et au moins un identifiant de communication permettant d'établir une communication d'un type donné, différent d'un courriel, avec un équipement de communication Ei qui est utilisé par le premier usager et avec lequel il souhaite recevoir une réponse à un courriel qu'il a transmis.

Il est important de noter que l'on entend ici par « champ dédié » aussi bien une commande protocolaire (ici SMTP) faisant partie d'un courriel, considéré dans sa globalité et non en tant que simple contenu informatif, qu'un mot clé de type ARPA qui fait partie du champ protocolaire SMTP appelé « DATA » qui contient le contenu informatif (ou message, notamment textuel) d'un courriel.

L'adjonction peut consister à intégrer dans le courriel un nouveau champ dédié CD parmi ceux prévus par le protocole de transport (ici SMTP) qui est utilisé pour transporter ce courriel.

Par exemple, on peut insérer le champ dédié CD entre le champ (ou commande) RCPT TO et le champ (ou commande) DATA, ou bien entre le champ (ou commande) MAIL FROM et le champ (ou commande) RCPT TO, ou encore entre la fin de contenu informatif et le champ (ou commande) <CRLF.CRLF>.

Dans une variante ou bien en complément on peut adjoindre le champ dédié CD (ou un autre champ dédié CD ayant un contenu différent de celui inséré entre deux commandes) entre deux mots clés de type ARPA qui font partie du contenu informatif du courriel. Par exemple, on peut insérer le champ dédié CD entre les mots clés Subject et CC ou entre les mots clés CC et BCC.

Il est important de noter que le contenu du champ dédié CD adjoint à un courriel est stocké avec le contenu informatif de ce courriel dans le serveur de messagerie Sj concerné, afin de pouvoir être récupéré en même temps que ce contenu informatif par l'équipement Ei' de l'usager destinataire.

Une deuxième étape principale (ii) du procédé selon l'invention est mise en oeuvre lorsqu'un second équipement de communication E2 d'un second usager a récupéré dans sa boîte de courriels reçus, qui est stockée dans son serveur de messagerie de réception S4, un courriel qui a été émis par le premier équipement de communication E1 d'un premier usager.

Cette deuxième étape principale (ii) peut par exemple être mise en oeuvre par des seconds moyens (ou module) de traitement MT2 qui font éventuellement partie du dispositif D qui est associé au second équipement E2 et qui sont (est) couplé(s) à l'application (ou client) de messagerie CM que comprend ce second équipement E2, afin de détecter (ou être averti(s)) lorsqu'un courriel a été reçu et accédé par ce second équipement E2 via son serveur de messagerie de réception S4.

Le courriel reçu comprend un champ dédié CD comportant un lien hypertexte de communication qui est associé à l'icône dédiée à l'option de réponse automatique qui est offerte par l'application de messagerie CM du second équipement E2. Cette association est effectuée par le second module de traitement MT2. Plus précisément, lorsque l'application de messagerie CM du second équipement E2 reçoit un courriel, le second module de traitement MT2 détermine si ce courriel contient un champ dédié CD comportant un lien hypertexte de communication. Dans la négative, il n'intervient pas, tandis que dans l'affirmative il procède à l'association du contenu du champ dédié CD à l'icône qui est dédiée à la réponse automatique, et plus précisément à la fonctionnalité qu'elle représente.

Si le second usager accepte de répondre au courriel reçu, par exemple en cliquant sur (ou en sélectionnant) l'icône dédiée à la réponse automatique, alors le second module de traitement MT2 active le lien hypertexte de communication qu'il a associé à cette icône. Cela déclenche l'établissement d'une communication entre le second équipement E2 associé et le serveur de communication SC qui est désigné par ce lien hypertexte de communication. Le serveur de communication SC gère alors automatiquement l'établissement d'une communication, d'un type qui est défini par un identifiant de communication qui est désigné par le lien hypertexte de communication, entre le second équipement E2 du second usager et un équipement Ei (éventuellement E1) du premier usager qui est associé à cet identifiant de communication désigné par le lien hypertexte de communication.

Le serveur de communication SC comprend par exemple des moyens de stockage MS dans lesquels il stocke chaque lien hypertexte de communication, contenu dans le champ dédié CD de chaque (premier) usager, en correspondance d'au moins un identifiant de communication associé à un équipement de communication de ce (premier) usager et correspondant à un type de communication donné. Ces moyens de stockage MS peuvent se présenter sous n'importe quelle forme connue de l'homme de l'art, comme par exemple (et non limitativement) une mémoire (éventuellement purement logicielle) ou une base de données.

La gestion effectuée par le serveur de communication SC peut par exemple consister à mettre en relation les deux équipements concernés afin qu'ils négocient entre eux l'établissement d'une communication selon le type qui est défini par l'identifiant de communication désigné par le lien hypertexte de communication. Cela peut par exemple consister à envoyer des groupes de codes éventuellement différents aux deux équipements concernés.

Ce type de communication, qui est différent du courriel, peut par exemple être un appel téléphonique ou vidéo, ou un appel via un messager client (ou « client messaging ») qui est installé sur l'équipement Ei de l'usager appelé (comme par exemple Google Talk®, Microsoft Office Communicator® ou Skype®), ou un message court de type SMS, ou encore un message court de type MMS.

On comprendra donc qu'une fois que le second usager a cliqué sur l'icône dédiée à la réponse automatique, affichée sur l'écran de son second équipement E2, une communication du type défini par l'identifiant de communication désigné par le lien hypertexte de communication est automatiquement établie entre ce second équipement E2 et un premier équipement (par exemple E1) du premier usager, afin que ledit second usager puisse communiquer au premier usager une réponse à son courriel (et éventuellement dialoguer avec lui en cas d'établissement d'une communication téléphonique).

On notera que si le premier équipement E1 et/ou le second équipement E2 ne dispose(nt) pas des ressources suffisantes pour établir la communication du type défini par l'identifiant de communication désigné par le le lien hypertexte de communication, alors on revient au mode de réponse classique et donc le second usager ne peut répondre au courriel initial du premier usager qu'en adressant un (nouveau) courriel de réponse au premier équipement E1 qu'il avait utilisé pour transmettre ledit courriel initial. Ce courriel de réponse est alors transmis par le second équipement E2 au serveur de messagerie (d'émission) S3 du second usager qui le stocke et le retransmet au serveur de messagerie (de réception) S2 du premier usager qui le stocke et le proposera à ce dernier lorsque son application de messagerie CM accédera à sa boîte de courriels reçus.

On notera également que le lien hypertexte de communication qui est contenu dans un champ dédié CD d'un courriel peut soit désigner un serveur de communication SC et un unique identifiant de communication permettant d'établir des communications d'un unique type (différent d'un courriel) avec un équipement de communication Ei utilisé par le premier usager (éventuellement différent du premier E1 qu'il utilise pour transmettre ses courriels), soit désigner un serveur de communication SC et au moins deux identifiants de communication qui permettent d'établir des communications de types différents avec au moins un équipement de cormmunication Ei utilisé par le premier usager (éventuellement différent du premier E1 qu'il utilise pour transmettre ces courriels).

Dans le premier cas, qui est connu de l'art antérieur, le second usager n'a pas le choix du type de communication qu'il va utiliser pour répondre au courriel du premier usager. C'est en effet le premier usager qui a préalablement choisi ce type de communication pour les réponses aux courriels qu'il envoie

Dans le second cas, selon l'invention, le second usager peut choisir le type de communication, qu'il va utiliser pour répondre au courriel du premier usager, parmi plusieurs types qui ont été préalablement sélectionnés par le premier usager pour les réponses aux courriels qu'il envoie. Cela nécessite que le serveur de communication SC stocke dans ses moyens de stockage MS certains liens hypertextes de communication en correspondance d'au moins deux identifiants de communication associés à au moins un équipement de communication d'un (premier) usager et correspondant à au moins deux types de communication différents. Dans ce cas, lorsque le second module de traitement MT2 d'un second équipement E2 active le lien hypertexte de communication contenu dans un champ dédié CD d'un courriel, cela déclenche l'établissement d'une communication entre ce second équipement E2 et le serveur de communication SC qui est désigné par ce lien hypertexte de communication, puis la détermination par le serveur de communication SC des différents types de communication qui sont stockés dans ses moyens de stockage MS en correspondance de ce lien hypertexte de communication, puis la transmission de ces différents types de communication déterminés au second équipement E2. Le second module de traitement MT2 provoque alors l'affichage (textuel ou sous forme d'icônes) des différents types de communication proposés sur l'écran du second équipement E2, afin que le second usager puisse sélectionner l'un d'entre eux. Le second module de traitement MT2 peut alors transmettre au serveur de communication SC le type de communication sélectionné afin qu'il gère automatiquement l'établissement d'une communication, du type sélectionné, entre le second équipement E2 du second usager et un équipement Ei (éventuellement E1) du premier usager qui est associé à l'identifiant de communication correspondant à ce type sélectionné dans ses moyens de stockage MS.

## Revendications

1. Procédé de gestion de communication **caractérisé en ce que**, lorsqu'un premier usager veut adresser un courriel à un second usager avec une demande de réponse, i) à adjoindre audit courriel un champ dédié comportant un lien hypertexte de communication désignant un serveur de communication (SC et au moins deux identifiants de communication permettant d'établirdes communications de types différents, et différents d'un courriel, avec au moins un équipement de communication (Ei) utilisé par ledit premier usager, et ii) à réception dudit courriel par un équipement de communication (Ei') dudit second usager, ledit second usager active le lien hypertexte de communication contenu dans le champ dédié adjoint audit courriel, afin que ledit serveur de communication (SC) qu'il désigne propose audit second usager chaque type de communication correspondant à chaque identifiant de communication désigné par ledit lien hypertexte de communication contenu dans le champ dédié adjoint audit courriel, afin que ledit second usager sélectionne l'un d'entre eux, puis, consécutivement à la sélection de l'un desdits types de communication, ledit serveur de communication (SC) gère l'établissement d'une communication dudit type sélectionné entre l'équipement de communication (Ei') dudit second usager et un équipement de communication (Ei) dudit premier usager qui est associé à l'identifiant de communication qui correspond audit type sélectionné.

2. Procédé selon la revendication 1, **caractérisé en ce que** ladite adjonction se fait dans un champ dédié du protocole de transport utilisé pour transporter ledit courriel.

3. Procédé selon la revendication 2, **caractérisé en ce que** ledit protocole de transport est SMTP.

4. Procédé selon la revendication 3, **caractérisé en ce que** l'on adjoint ledit champ dédié entre un champ appelé « RCPT TO » et un champ appelé « DATA ».

5. Procédé selon l'une des revendications 1 à 4, **caractérisé en ce que** l'on adjoint ledit champ dédié entre deux mots clés intégrés dans un champ du courriel qui est réservé au contenu informatif de ce dernier.

6. Procédé selon l'une des revendications 1 à 5, **caractérisé en ce que** chaque type de communication est choisi dans un groupe comprenant au moins un appel téléphonique, un appel vidéo, un appel via un messager client installé sur équipement (Ei) de l'usager appelé, un message court de type SMS, et un message court de type MMS.

## Patentansprüche

1. Verfahren zum Verwalten der Kommunikation, **dadurch gekennzeichnet, dass**, wenn ein erster Benutzer eine E-Mail an einen zweiten Benutzer mit Antwortanforderung senden möchte, es darin besteht, i) dass der besagten E-Mail ein dediziertes Feld mit einem Hypertext-Kommunikations-Link, welcher einen Kommunikationsserver (SC) bezeichnet, und mindestens zwei Kommunikationskennungen, welche es ermöglichen, Kommunikationen unterschiedlicher Typen, die sich von einer E-Mail unterscheiden, mit mindestens einem von dem besagten ersten Benutzer benutzten Kommunikationsgerät (Ei) aufzubauen, hinzugefügt wird, und ii) dass bei Empfang der besagten E-Mail an einem Kommunikationsgerät (Ei') des besagten zweiten Benutzers, der besagte zweite Benutzer den in dem der E-Mail hinzugefügten dedizierten Feld enthaltenen Hypertext-Kommunikations-Link aktiviert, damit der besagte Kommunikationsserver (SC), den er bezeichnet, dem besagten zweiten Benutzer jeden Kommunikationstyp, welcher jeder von dem besagten in dem besagten der besagten E-Mail hinzugefügten dedizierten Feld enthaltenen Kommunikationskennung entspricht, anbietet, damit der besagte zweite Benutzer einen davon auswählt, und dass der besagte Kommunikationsserver (SC) im Anschluss an die Auswahl eines der besagten Kommunikationstypen den Aufbau einer Kommunikation vom ausgewählten Typ zwischen dem Kommunikationsgerät (Ei') des besagten zweiten Benutzers und einem Kommunikationsgerät (Ei) des besagten ersten Benutzers, welches mit der dem ausgewählten Typ entsprechenden Kommunikationskennung assoziiert ist, verwaltet.

2. Verfahren nach Anspruch 1, **dadurch gekennzeichnet, dass** das besagte Hinzufügen in einem dedizierten Feld des für den Transport der besagten E-Mail verwendeten Transportprotokolls erfolgt.

3. Verfahren nach Anspruch 2, **dadurch gekennzeichnet, dass** das besagte Transportprotokoll das SMTP-Protokoll ist.

4. Verfahren nach Anspruch 3, **dadurch gekennzeichnet, dass** das besagte dedizierte Feld zwischen einem sogenannten "RCPT TO"-Feld und einem sogenannten "DATA"-Feld hinzugefügt ist.

5. Verfahren nach einem der Ansprüche 1 bis 4, **dadurch gekennzeichnet, dass** das besagte dedizierte Feld zwischen zwei in einem Feld der E-Mail, welches für den informativen Inhalt dieser E-Mail vorgesehen ist, integrierten Schlüsselwörtern hinzugefügt ist.

6. Verfahren nach einem der Ansprüche 1 bis 5, **dadurch gekennzeichnet, dass** jede Kommunikationsart in einer Gruppe zumindest bestehend aus einem Telefonanruf, einem Video-Anruf, einen Anruf über einen im Gerät (Ei) des angerufenen Benutzers installierten Messenger-Client, einer Kurznachricht vom Typ SMS und einer Kurznachricht vom Typ MMS gewählt wird.

## Claims

1. A communication management method **characterized in that** when a first user wants to send an email to a second user with a reply request, i) adding to said email a dedicated field comprising a communication hyperlink designating a communication server (SC) and at least two communication identifiers making it possible to establish communications of different types, and different from an email, with at least one communication equipment (Ei) used by said first user, and ii) upon receipt of said email by a communication equipment (Ei') of said second user, said second user activates the communication hyperlink contained in the dedicated field attached to said email, so that said communication server (SC) that it designates offers to said second user each type of communication corresponding to each communication identifier designated by the communication hyperlink contained within the dedicated field attached to said email, so that said second user selects one of them, then, subsequent to the selection of one of said types of communication, said communication server (SC) manages the establishing of a communication of said selected type between the communication equipment (Ei') of said second user and a communication equipment (Ei) of said first user that is associated with the communication identifier that corresponds to said selected type.

2. A method according to claim 1, **characterized in that** said addition is made to a dedicated field of the transport protocol used to transport said email.

3. A method according to claim 2, **characterized in that** said transport protocol is SMTP.

4. A method according to claim 3, **characterized in that** said dedicated field is added between a field call "RCPT TO" and a field called "DATA".

5. A method according to one of the claims 1 to 4, **characterized in that** said dedicated field is added between two keywords integrated in a field of the email that is reserved for the informative content thereof.

6. A method according to one of the claims 1 to 5, **characterized in that** each type of communication is chosen in a group comprising at least one telephone call, a video call, a call via a client messenger installed on the equipment (Ei) of the called user, a short SMS message, and a short MMS message.
